# EUROPEAN PATENT APPLICATION

(11) **EP 4 546 666 A1**
(43) Date of publication of application: **30.04.2025**
(21) Application number: 22956838.1
(22) Date of filing: 31.08.2022
(51) Int. Cl.: H04B 10/2543, H04B 10/2507

(54) **SIGNAL PROCESSING METHOD AND APPARATUS**

(71) Applicant: Huawei Technologies Co., Ltd., Shenzhen, Guangdong 518129 (CN)
(72) Inventor: QING, Ting, Shenzhen, Guangdong 518129 (CN); LI, Xu, Shenzhen, Guangdong 518129 (CN); CHEN, Peihao, Shenzhen, Guangdong 518129 (CN)
(74) Representative: Körber, Martin Hans
(86) International application number: PCT/CN2022/116056
(87) International publication number: WO 2024/045006

(57) **Abstract**

This application provides a signal processing method and apparatus. The signal processing method provided in this application includes: receiving a first optical signal, where the first optical signal includes optical signals of a plurality of frequencies; performing phase modulation on the first optical signal to obtain a second optical signal, where a phase difference between an optical signal of a first frequency and an optical signal of a second frequency in the second optical signal is a first preset phase value, and an absolute value of a difference between the first frequency and a third frequency in the second optical signal is the same as an absolute value of a difference between the second frequency and a fourth frequency in the second optical signal; and sending the second optical signal to a photoelectric detector PD. According to the signal processing method provided in this application, impact of an interfering microwave signal obtained through demodulating a stray optical signal can be reduced.

## Description

### TECHNICAL FIELD

This application relates to the field of communication technologies, and more specifically, to a signal processing method and apparatus.

### BACKGROUND

Because an optical fiber has advantages such as low loss and a long signal transmission distance, in a current radio over fiber communication technology, a transmit end first modulates an original microwave signal onto an optical signal to obtain a modulated optical signal, and then transmits the modulated optical signal to a receive end through the optical fiber. Then, when receiving the modulated optical signal, the receive end performs photoelectric conversion on the modulated optical signal by using a photoelectric detector (photoelectric detector, PD), to obtain the original microwave signal through demodulation.

However, in the radio over fiber communication technology, when the modulated optical signal is transmitted to the PD through a transmission medium, for example, the optical fiber, the modulated optical signal is usually inevitably affected by a non-linear effect, and stray optical signals (which may be considered as some interfering optical signals) are introduced. Consequently, when the receive end demodulates the modulated optical signal by using the PD, in addition to the original microwave signal, the microwave signal obtained through demodulation further includes some interfering microwave signals obtained through demodulating the stray optical signals, and the interfering microwave signals affect communication quality.

Therefore, how to reduce impact of the interfering microwave signal obtained through demodulating the stray optical signal becomes a technical problem that needs to be urgently resolved.

### SUMMARY

This application provides a signal processing method and apparatus, so that impact of an interfering microwave signal obtained through demodulating a stray optical signal can be reduced.

According to a first aspect, this application provides a signal processing method, applied to a signal processing apparatus, and including: receiving a first optical signal, where the first optical signal includes optical signals of a plurality of frequencies; performing phase modulation on the first optical signal to obtain a second optical signal, where a phase difference between an optical signal of a first frequency and an optical signal of a second frequency in the second optical signal is a first preset phase value, and an absolute value of a difference between the first frequency and a third frequency in the second optical signal is the same as an absolute value of a difference between the second frequency and a fourth frequency in the second optical signal; and sending the second optical signal to a photoelectric detector PD.

Because the signal processing apparatus performs phase modulation only on the first optical signal, in this embodiment, a frequency included in the second optical signal obtained by performing phase modulation by the signal processing apparatus is the same as the plurality of frequencies included in the first optical signal.

In this embodiment, after the first optical signal is obtained, if interference caused by an optical signal that is of a specific frequency (also referred to as the first frequency) and that is input into the PD is to be reduced, a phase difference between an optical signal of a first frequency and an optical signal of a second frequency in the first optical signal is adjusted to the first preset phase value, or a phase difference between an optical signal of a second frequency and an optical signal of a first frequency in the first optical signal is adjusted to the first preset phase value. A condition that the first frequency and the second frequency meet is that the absolute value of the difference between the first frequency and the third frequency in the plurality of frequencies is the same as the absolute value of the difference between the second frequency and the fourth frequency in the plurality of frequencies.

It should be understood that, after passing through the PD, the optical signal of the first frequency and an optical signal of the third frequency form a first electrical signal whose frequency is the absolute value of the difference between the first frequency and the third frequency, and after passing through the PD, the optical signal of the second frequency and an optical signal of the fourth frequency form a second electrical signal whose frequency is the absolute value of the difference between the second frequency and the fourth frequency. Because the absolute value of the difference between the first frequency and the third frequency is the same as the absolute value of the difference between the second frequency and the fourth frequency in the plurality of frequencies (in this embodiment, a frequency whose frequency value is the absolute value of the difference between the first frequency and the third frequency or the absolute value of the difference between the second frequency and the fourth frequency is also referred to as a target frequency), the first electrical signal is superposed with the second electrical signal. **In** this embodiment, the phase difference between the optical signal of the second frequency and the optical signal of the first frequency is adjusted to the first preset phase value, and therefore, after the first electrical signal is superposed with the second electrical signal, amplitude (or strength) of a final electrical signal of the target frequency is reduced, thereby reducing impact of an interfering microwave signal obtained through demodulating the optical signal of the first frequency or the optical signal of the second frequency.

With reference to the first aspect, in a possible implementation, the first optical signal includes a modulated optical signal obtained by modulating a first microwave signal by using an optical carrier signal, and the first frequency and the second frequency are different from a frequency included in the modulated optical signal.

It should be understood that, after the first microwave signal is modulated by using the optical carrier signal to obtain the modulated optical signal, some optical signals of other frequencies that are different from the frequency included in the modulated optical signal may be introduced in a transmission process of the modulated optical signal. The optical signals of the other frequencies that are different from the frequency included in the modulated optical signal may be considered as signals that cause interference to the modulated optical signal. Therefore, in this embodiment, the other frequencies that are different from the frequency included in the modulated optical signal may be used as the first frequency and the second frequency in this application, and the phase difference between the first frequency and the second frequency is adjusted to the first preset phase value, so that impact of an interfering microwave signal obtained through demodulating the optical signals of the other frequencies other than the frequency included in the modulated optical signal can be reduced.

With reference to the first aspect, in a possible implementation, a part of the plurality of frequencies is distributed in a target frequency band, and the target frequency band is a frequency band that the modulated optical signal is in.

With reference to the first aspect, in a possible implementation, the first frequency is in the target frequency band, and the second frequency is outside the target frequency band.

In this implementation, the phase difference between the optical signal corresponding to the first frequency in the frequency band (namely, the target frequency band) that the modulated optical signal is in and the optical signal corresponding to the second frequency outside the frequency band that the modulated optical signal is in is adjusted to the first preset phase value, so that impact of an interfering microwave signal obtained through demodulating the optical signal corresponding to the first frequency in the target frequency band can be reduced based on the optical signal corresponding to the second frequency outside the target frequency band.

With reference to the first aspect, in a possible implementation, the third frequency and the fourth frequency are in the target frequency band, the first frequency is outside the target frequency band, and the second frequency is outside the target frequency band.

In this implementation, the phase difference between the optical signal corresponding to the first frequency outside the frequency band (namely, the target frequency band) that the modulated optical signal is in and the optical signal corresponding to the second frequency outside the frequency band that the modulated optical signal is in is adjusted to the first preset phase value, so that impact of an interfering microwave signal obtained through demodulating the optical signal corresponding to the first frequency outside the target frequency band can be reduced based on the optical signal corresponding to the second frequency outside the target frequency band.

With reference to the first aspect, in a possible implementation, the third frequency and the fourth frequency are a same frequency.

For example, the same frequency is a frequency of the optical carrier signal.

With reference to the first aspect, in a possible implementation, the first preset phase value is 180 degrees.

With reference to the first aspect, in a possible implementation, the method further includes: receiving first feedback information, where the first feedback information indicates a second microwave signal obtained by the PD through demodulating the second optical signal and when the phase difference is the first preset phase value; and adjusting the first preset phase value based on the second microwave signal.

In this implementation, the signal processing apparatus may receive the first feedback information, to determine, based on the second microwave signal indicated by the first feedback information, whether the first preset phase value needs to be adjusted, so that the signal processing apparatus can perform better phase modulation on the first optical signal, to further reduce impact of interfering microwave signals obtained through demodulating the optical signal of the first frequency and the optical signal of the second frequency.

According to a second aspect, this application provides a signal processing apparatus, including: a transceiver module, configured to receive a first optical signal, where the first optical signal includes optical signals of a plurality of frequencies; and a processing module, configured to perform phase modulation on the first optical signal to obtain a second optical signal, where a phase difference between an optical signal of a first frequency and an optical signal of a second frequency in the second optical signal is a first preset phase value, and an absolute value of a difference between the first frequency and a third frequency in the second optical signal is the same as an absolute value of a difference between the second frequency and a fourth frequency in the second optical signal; and the transceiver module is further configured to send the second optical signal to a photoelectric detector PD.

With reference to the second aspect, in a possible implementation, the first optical signal includes a modulated optical signal obtained by modulating a first microwave signal by using an optical carrier signal, and the first frequency and the second frequency are different from a frequency included in the modulated optical signal.

With reference to the second aspect, in a possible implementation, a part of the plurality of frequencies is distributed in a target frequency band, and the target frequency band is a frequency band that the modulated optical signal is in.

With reference to the second aspect, in a possible implementation, the first frequency is in the target frequency band, and the second frequency is outside the target frequency band.

With reference to the second aspect, in a possible implementation, the first frequency is outside the target frequency band, and the second frequency is outside the target frequency band.

With reference to the second aspect, in a possible implementation, the third frequency and the fourth frequency are a same frequency.

For example, the same frequency is a frequency of the optical carrier signal.

With reference to the second aspect, in a possible implementation, the first preset phase value is 180 degrees.

With reference to the second aspect, in a possible implementation, the transceiver module is further configured to: receive first feedback information, where the first feedback information indicates a second microwave signal obtained by the PD through demodulating the second optical signal and when the phase difference is the first preset phase value; and the processing module is further configured to adjust the first preset phase value based on the second microwave signal.

According to a third aspect, this application provides a signal processing apparatus, including a memory and a processor, where the memory is configured to store program instructions; and the processor is configured to invoke the program instructions in the memory to perform the method according to the first aspect or any one of possible implementations thereof.

According to a fourth aspect, this application provides a communication system, including the signal processing apparatus according to the second aspect or the third aspect or any one of possible implementations of the second aspect and the third aspect.

According to a fifth aspect, this application provides a computer-readable medium. The computer-readable medium stores program code to be executed by a computer, and the program code includes instructions used to perform the method according to the first aspect or any one of possible implementations thereof.

According to a sixth aspect, this application provides a computer program product. The computer program product includes computer program code. When the computer program code is run on a computer, the computer is enabled to implement the method according to the first aspect or any one of possible implementations thereof.

### BRIEF DESCRIPTION OF DRAWINGS

FIG. 1 is a diagram of an application scenario according to this application;
FIG. 2 is a diagram of a structure of reducing impact of an interfering microwave signal obtained through demodulating a stray optical signal in a conventional technology;
FIG. 3 is a schematic flowchart of a signal processing method according to an embodiment of this application;
FIG. 4 is a diagram of a structure of a first optical signal according to an embodiment of this application;
FIG. 5 is a diagram of a structure of performing phase modulation according to an embodiment of this application;
FIG. 6 is a diagram of a spectrum of a first optical signal obtained by introducing a stray optical signal into a modulated optical signal according to an embodiment of this application;
FIG. 7 is a diagram of a structure of performing phase modulation according to an embodiment of this application;
FIG. 8 is a diagram of a structure of performing phase modulation according to an embodiment of this application;
FIG. 9 is a diagram of a structure of a signal processing system according to an embodiment of this application;
FIG. 10 is a diagram of a structure of a signal processing apparatus according to an embodiment of this application; and
FIG. 11 is a diagram of a structure of a signal processing apparatus according to another embodiment of this application.

### DESCRIPTION OF EMBODIMENTS

A microwave photonics technology refers to modulating a microwave signal onto an optical signal to perform an operation such as signal generation, processing, or transmission in optical domain. Therefore, the microwave photonics technology has been widely applied to fields of radio over fiber (radio over fiber, ROF) communication technologies, array radars, cable televisions, and the like.

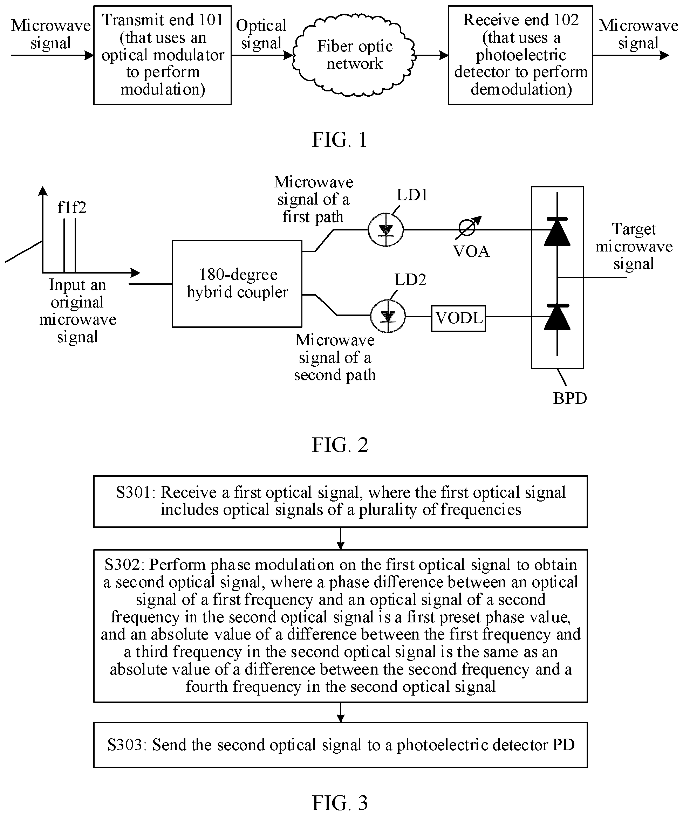

For example, FIG. 1 is a diagram of an application scenario according to this application. As shown in FIG. 1, in an ROF communication scenario, because an optical fiber has advantages such as low loss, a long signal transmission distance, a larger transmission capacity, and lower costs, a transmit end 101 first modulates a microwave signal by using an optical modulator to obtain a modulated optical signal (that is, the microwave signal becomes an optical signal after modulation), and then transmits the modulated optical signal to a receive end 102 through the optical fiber. Next, when receiving the modulated optical signal, the receive end 102 performs photoelectric conversion on the modulated optical signal by using a photoelectric detector (photoelectric detector, PD), to obtain the microwave signal through demodulation to obtain transmitted information.

However, in the ROF communication scenario, when the modulated optical signal is transmitted to the PD through a transmission medium, for example, the optical fiber, the modulated optical signal is usually inevitably affected by a non-linear effect, and consequently, stray optical signals of other frequencies are introduced. The stray optical signals may be considered as some interfering signals, for example, include a second-order intermodulation stray optical signal and a third-order intermodulation signal. In the stray optical signals, some stray optical signals are odd-order stray optical signals, and some stray optical signals are even-order stray optical signals; and the stray optical signals may be distributed in a frequency band or may be distributed outside the frequency band. Usually, a stray optical signal outside the frequency band may be removed by filtering or the like, and a stray optical signal in the frequency band is the most difficult to eliminate. Consequently, when the PD is used to demodulate the modulated optical signal, a microwave signal obtained through demodulation further includes some interfering microwave signals obtained through demodulating the stray optical signals of the other frequencies, and the interfering microwave signals affect communication quality. Therefore, how to reduce impact of the interfering microwave signal obtained through demodulating the stray optical signal becomes a technical problem that needs to be urgently resolved.

It should be noted herein that, a quantity of frequency components included in the microwave signal is not limited in embodiments of this application. For example, the microwave signal may be a microwave signal including only one frequency component, and is also referred to as a single-frequency microwave signal in this application; or the microwave signal may be a microwave signal including a plurality of frequency components, and is also referred to as a multi-frequency microwave signal in this application.

It should be understood that, regardless of the single-frequency microwave signal or the multi-frequency microwave signal, the modulated optical signal obtained through optical modulation includes optical carrier frequencies used during modulation, in other words, the modulated optical signal obtained through modulation is a signal including a plurality of frequency components.

Currently, an implementation of reducing impact of the interfering microwave signal obtained through demodulating the stray optical signal is shown in FIG. 2: An original microwave signal (for example, including microwave signals whose frequencies are f1 and f2) passes through a 180-degree hybrid coupler, and the 180-degree hybrid coupler is configured to output microwave signals of two paths based on the original microwave signal. Specifically, the microwave signal of a first path is the original microwave signal, and the microwave signal of a second path is a microwave signal with a phase difference of 180 degrees from the original microwave signal. Then, the microwave signal of the first path is modulated by using a laser 1 (LD1 in FIG. 2) to obtain a first modulated optical signal, and the microwave signal of the second path is modulated by using a laser 2 (LD2 in FIG. 2) to obtain a second modulated optical signal; and the two modulated optical signals are transmitted to a balanced photoelectric detector (balanced photo detector, BPD) through an optical fiber. Finally, the BPD demodulates the first modulated optical signal to obtain a first microwave signal and demodulates the second modulated optical signal to obtain a second microwave signal, and performs a difference between the first microwave signal and the second microwave signal, to output a target microwave signal after demodulation.

It may be understood that, in a transmission process in which the first modulated optical signal and the second modulated optical signal are transmitted to the balanced photoelectric detector through the optical fiber, stray optical signals may be introduced into the first modulated optical signal and the second modulated optical signal. It is assumed that a first modulated optical signal obtained by introducing the stray optical signal is referred to as a first distorted modulated optical signal, and a second modulated optical signal obtained by introducing the stray optical signal is referred to as a second distorted modulated optical signal. In this case, in this implementation, because a phase difference between the microwave signal of the first path and the microwave signal of the second path is 180 degrees, a phase of an odd-order stray optical signal included in the first distorted modulated optical signal is opposite to a phase of an odd-order stray optical signal included in the second distorted modulated optical signal, and a phase of an even-order stray optical signal included in the first distorted modulated optical signal is the same as a phase of an even-order stray optical signal included in the second distorted modulated optical signal, so that after the first distorted modulated optical signal and the second distorted modulated optical signal are input to the BPD, interfering microwave signals caused by opposite-phase stray optical signals in the first distorted modulated optical signal and the second distorted modulated optical signal are added, and interfering microwave signals caused by same-phase stray optical signals in the first distorted modulated optical signal and the second distorted modulated optical signal cancel each other, thereby eliminating the even-order stray optical signals.

When the interfering microwave signals obtained through demodulating the stray optical signals are reduced, as shown in FIG. 2, a variable attenuator (variable optical attenuator, VOA) may also be used to adjust amplitude of an optical signal in the first path, and a variable optical delay line (variable optical delay line, VODL) may be used to adjust a phase of an optical signal in the second path, so that even-order stray optical signals in the first microwave signal and the demodulated second microwave signal that are obtained through demodulation can be better canceled.

It can be learned that, in a method for eliminating the stray optical signals, only the even-order stray optical signal can be canceled, but the odd-order stray optical signal cannot be canceled. In addition, in the method, two modulators and two photoelectric detectors are required, which is high in costs.

In view of this, embodiments of this application provide a signal processing method, to reduce impact of the interfering microwave signal obtained through demodulating the stray optical signal.

FIG. 3 is a schematic flowchart of a signal processing method according to an embodiment of this application. As shown in FIG. 3, the method includes S301, S302, and S303. The method may be performed by a signal processing apparatus. The signal processing apparatus may be a chip configured to process the signal processing method described in this application, may be placed in the receive end 102 shown in FIG. 1, and is located before a PD included in the receive end 102.

It should be noted herein that, a specific form of the receive end 102 is not limited in this embodiment. For example, the receive end 102 is a base station that can implement photoelectric conversion on a modulated optical signal to obtain a microwave signal through modulation. In this case, the signal processing apparatus in this embodiment may be placed in the base station, and is located before a PD included in the base station.

S301: Receive a first optical signal, where the first optical signal includes optical signals of a plurality of frequencies.

It may be understood that, one signal may be usually decomposed into signals of different frequencies, in other words, one signal may be usually formed by superimposing a plurality of signals of different frequencies, in other words, signals of different frequencies may be combined into one signal.

In this embodiment, that the first optical signal includes optical signals of a plurality of frequencies may be understood as follows: The first optical signal is formed by superposing the optical signals of the plurality of frequencies, or the optical signals of the plurality of frequencies may be combined into the first optical signal.

It should be noted herein that, how to obtain the optical signals of the plurality of frequencies included in the first optical signal is not limited in embodiments of this application. For example, an optical spectrum graph of the first optical signal may be obtained via a spectrum analyzer, and analysis is performed on the optical spectrum graph of the first optical signal, to obtain the optical signals of the plurality of frequencies included in the first optical signal.

As described in the foregoing related part of this application, the optical signal is usually inevitably affected by a non-linear effect in a transmission process. Therefore, in this embodiment, the first optical signal received by a signal processor may usually be a non-linear distorted optical signal. In other words, in addition to some target optical signals corresponding to desired frequencies, the first optical signal may further include some optical signals corresponding to other undesired frequencies. The optical signals corresponding to the undesired frequencies are also referred to as interfering optical signals or stray optical signals in this application. Specifically, the stray optical signals may be odd-order stray optical signals, or may be even-order stray optical signals.

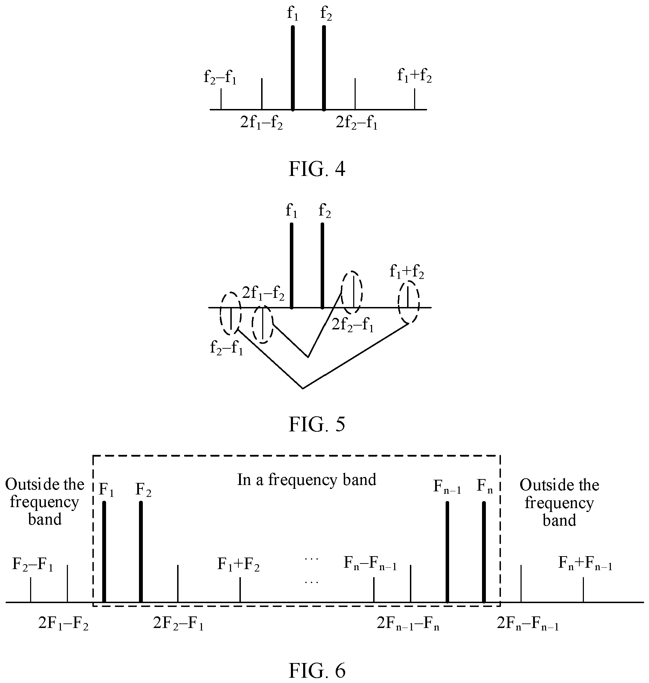

For example, FIG. 4 is a diagram of a structure of the first optical signal according to an embodiment of this application. As shown in FIG. 4, the first optical signal includes an optical signal whose frequency is f₁ and an optical signal whose frequency is f₂; and further includes an optical signal whose frequency is 2f₁-f₂, an optical signal whose frequency is 2f₂-f₁, an optical signal whose frequency is f₂-f₁, and an optical signal whose frequency is f₁+f₂. The optical signal whose frequency is f₁ and the optical signal whose frequency is f₂ are desired target optical signals, the optical signal whose frequency is f₂-f₁ and the optical signal whose frequency is f₁+f₂ are second-order intermodulation optical signals generated based on the frequency f₁ and the frequency f₂, and the optical signal whose frequency is 2f₁-f₂ and the optical signal whose frequency is 2f₂-f₁ are third-order intermodulation optical signals generated based on the frequency f₁ and the frequency f₂. That is, in this example, in addition to the target optical signals, the first optical signal further includes the second-order intermodulation optical signals and the third-order intermodulation optical signals, and the second-order intermodulation optical signals and the third-order intermodulation optical signals are stray optical signals.

S302: Perform phase modulation on the first optical signal to obtain a second optical signal, where a phase difference between an optical signal of a first frequency and an optical signal of a second frequency in the second optical signal is a first preset phase value, and an absolute value of a difference between the first frequency and a third frequency in the second optical signal is the same as an absolute value of a difference between the second frequency and a fourth frequency in the second optical signal.

As described in S301, in addition to the target optical signals corresponding to the desired frequencies, the first optical signal may further include some stray optical signals corresponding to the other undesired frequencies. The stray optical signals may be the odd-order stray optical signals, or may be the even-order stray optical signals.

It may be understood that, if the first optical signal includes the stray optical signal, after the first optical signal passes through a photoelectric detector (photoelectric detector, PD), an interfering microwave signal obtained through demodulating the stray optical signal may further exist in a microwave signal output by the PD. Consequently, transmission of the signal may be affected. Therefore, in this embodiment, before the first optical signal is input to the PD, the phase modulation is first performed on the first optical signal.

Specifically, in this embodiment, after the first optical signal is obtained, if interference caused by a stray optical signal that is of a specific frequency (also referred to as the first frequency) and that is input into the PD is to be reduced, a phase difference between an optical signal of the first frequency and an optical signal of the second frequency in the first optical signal is adjusted to the first preset phase value, or a phase difference between an optical signal of the second frequency and an optical signal of the first frequency in the first optical signal is adjusted to the first preset phase value.

A condition that the first frequency and the second frequency meet is that the absolute value of the difference between the first frequency and the third frequency in the plurality of frequencies is the same as the absolute value of the difference between the second frequency and the fourth frequency in the plurality of frequencies.

It should be noted herein that, a specific value of the first preset phase value is not limited in embodiments of this application. Preferably, the first preset phase value is 180 degrees.

For example, for the first optical signal shown in FIG. 4, if an interfering signal caused by the optical signal whose frequency is 2f₂-f₁ after the optical signal passes through the PD is to be reduced, because an absolute value (|f₂-f₁|) of a frequency difference between the frequency 2f₂-f₁ and the frequency f₂ is just the same as an absolute value (|f₂-f₁|) of a frequency difference between the frequency 2f₁-f₂ and the frequency f₁, a phase difference between the optical signal whose frequency is 2f₁-f₂ and the optical signal whose frequency is 2f₂-f₁ may be set to 180 degrees, to obtain a second optical signal shown in FIG. 5. For another example, if an interfering signal caused by the optical signal whose frequency is f₁+f₂ after the optical signal passes through the PD is to be reduced, because an absolute value (f₁) of a frequency difference between the frequency f₁+f₂ and the frequency f₂ is just the same as an absolute value (f₁) of a frequency difference between the frequency f₂-f₁ and the frequency f₂, a phase difference between the optical signal whose frequency is f₁+f₂ and the optical signal whose frequency f₂-f₁ may be set to 180 degrees.

It should be noted herein that, FIG. 4 merely shows an example of the first optical signal. The first optical signal may further include more frequency information. This is not limited in this application.

In this embodiment, after the phase modulation is performed on the first optical signal, the second optical signal is obtained. It should be understood that, in the second optical signal obtained in this embodiment, frequencies included in the second optical signal are the same as the frequencies included in the first optical signal, but a difference lies in that the phase difference between the optical signal of the first frequency and the optical signal of the second frequency in the second optical signal is the first preset phase value.

S303: Send the second optical signal to the photoelectric detector PD.

In this embodiment, after the phase modulation is performed on the first optical signal to obtain the second optical signal, the second optical signal instead of the first optical signal is sent to the PD.

It should be understood that, after passing through the PD, the optical signal of the first frequency and an optical signal of the third frequency form a first electrical signal whose frequency is the absolute value of the difference between the first frequency and the third frequency, and after passing through the PD, the optical signal of the second frequency and an optical signal of the fourth frequency form a second electrical signal whose frequency is the absolute value of the difference between the second frequency and the fourth frequency.

In this embodiment, because the absolute value of the difference between the first frequency and the third frequency is the same as the absolute value of the difference between the second frequency and the fourth frequency in the plurality of frequencies (in this embodiment, a frequency whose frequency value is the absolute value of the difference between the first frequency and the third frequency or the absolute value of the difference between the second frequency and the fourth frequency is also referred to as a target frequency), the first electrical signal is superposed with the second electrical signal. In this embodiment, the phase difference between the optical signal of the second frequency and the optical signal of the first frequency is adjusted to the first preset phase value, and therefore, after the first electrical signal is superposed with the second electrical signal, amplitude (or strength) of a final electrical signal of the target frequency is reduced, thereby reducing impact of an interfering microwave signal obtained through demodulating the optical signal of the first frequency or the optical signal of the second frequency.

Optionally, if the first preset phase value is 180 degrees, and amplitude of the optical signal of the first frequency and amplitude of the second optical signal are completely the same, after the first electrical signal formed by the optical signal of the first frequency and the optical signal of the third frequency passing through the PD is superposed with the second electrical signal formed by the optical signal of the second frequency and the optical signal of the fourth frequency passing through the PD, the first electrical signal and the second electrical signal may completely cancel each other, so that amplitude of the interfering microwave signal obtained through demodulating the optical signal of the first frequency or the optical signal of the second frequency can be better reduced.

It should be noted herein that, in embodiments of this application, the sending the second optical signal to the PD may also be referred to as outputting the second optical signal to the PD. It should be further noted herein that, in this application, more modules may be further included between the signal processing apparatus and the PD, and this does not constitute a limitation on this application.

In this embodiment, the signal processing apparatus adjusts a phase difference between an optical signal of the first frequency and an optical signal of the second frequency that meet the condition in the first optical signal to a first preset threshold, thereby reducing impact of interfering microwave signals obtained by the PD through demodulating the optical signal of the first frequency and the optical signal of the second frequency that pass through the PD.

In an optional embodiment, the first optical signal in this application includes a modulated optical signal obtained by modulating a first microwave signal by using an optical carrier signal, and the first frequency and the second frequency are different from a frequency included in the modulated optical signal and the frequency included in the modulated optical signal.

It may be understood that, when the first optical signal includes the modulated optical signal obtained by modulating the first microwave signal by using the optical carrier signal, usually, an optical signal corresponding to the frequency included in the modulated optical signal is the desired target optical signal, and the optical signal corresponding to the first frequency and the optical signal corresponding to the second frequency may be considered as undesired optical signals that cause interference, where the first frequency and the second frequency are different from the frequency included in the modulated optical signal. In other words, in this embodiment, optical signals corresponding to frequencies other than the frequency in the modulated optical signal in the first optical signal may all be considered as an optical signal of the first frequency or a stray optical signal of the second frequency that causes interference after passing through the PD and that is intended to be reduced in embodiments of this application.

It may be further understood that, in a transmission process of the modulated optical signal, the stray optical signal may be introduced into a frequency band that the modulated optical signal is in, or the stray optical signal may be introduced outside the frequency band that the modulated optical signal is in. In other words, in this embodiment, after the first optical signal is obtained by introducing stray into the modulated optical signal, a part of frequencies in the plurality of frequencies included in the first optical signal is in the frequency band that the modulated optical signal is in (also referred to as a target frequency band in this application), and a frequency other than the part of frequencies in the plurality of frequencies is outside the target frequency band.

For example, FIG. 6 is a diagram of a spectrum of a first optical signal obtained by introducing a stray optical signal into a modulated optical signal according to an embodiment of this application. As shown in FIG. 6, the first optical signal includes frequencies, such as F₁, F₂, ..., Fₙ₋₁, and Fₙ in the figure, included in respective modulated optical signals obtained by modulating, by using the optical carrier signal, first microwave signals whose frequencies are *f*₁, *f*₂, *f*_{*n-*1}, ..., and *fₙ* (black thick solid lines in the figure indicate that the frequencies are all in the target frequency band). Optical signals of the frequencies may be considered as desired target optical signals. In addition, as shown in FIG. 6, some optical signals of other frequencies, such as optical signals corresponding to frequencies F₂-F₁, 2F₁-F₂, 2F₂-F₁, F₂+F₁, Fₙ-Fₙ₋₁, 2Fₙ₋₁-Fₙ, 2Fₙ-Fₙ₋₁, and Fₙ+Fₙ₋₁ in the figure, are further included, and the optical signals corresponding to the other frequencies may be considered as stray optical signals. The stray optical signals whose frequencies are F₂-F₁, 2F₁-F₂, 2Fₙ-Fₙ₋₁, and Fₙ+Fₙ₋₁ are all outside the target frequency band, and stray optical signals whose frequencies are 2F₂-F₁, F₂+F₁, Fₙ-Fₙ₋₁, and 2Fₙ₋₁-Fₙ are all in the target frequency band.

It should be noted herein that, how to obtain the spectrum graph shown in FIG. 6 is not limited in this embodiment. For example, a spectrum characteristic of the first optical signal may be analyzed by using a spectrum monitoring module, to obtain frequency distribution of the first optical signal.

Further, in this application, when the first frequency and the second frequency are different from the frequency included in the modulated optical signal, the first frequency in this embodiment may be in the target frequency band, and the second frequency may be outside the target frequency band.

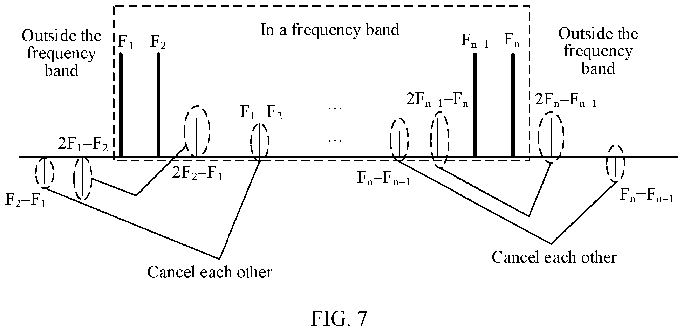

For example, for the first optical signal shown in FIG. 6, the optical signals corresponding to the frequencies F₂-F₁, 2F₁-F₂, 2F₂-F₁, F₂+F₁, Fₙ-Fₙ₋₁, 2Fₙ₋₁-Fₙ, 2Fₙ-Fₙ₋₁, and Fₙ+Fₙ₋₁ may all be considered as the stray optical signals, and the frequencies 2F₂-F₁, F₂+F₁, Fₙ-Fₙ₋₁, and 2Fₙ₋₁-Fₙ are in the target frequency band (all of which may be considered as the first frequency in this application). As shown in FIG. 7, because an absolute value of a frequency difference between the stray optical signal whose frequency is 2F₂-F₁ and the target optical signal whose frequency is F₂ is equal to an absolute value of a frequency difference between the stray optical signal whose frequency is 2F₁-F₂ and the target optical signal whose frequency is F₁, 2F₂-F₁ may be used as the second frequency in this application, and then, a phase difference between the stray optical signal whose frequency is 2F₁-F₂ and the stray optical signal whose frequency is 2F₂-F₁ is set to the first preset threshold, for example, 180 degrees.

Similarly, as shown in FIG. 7, because an absolute value of a frequency difference between the stray optical signal whose frequency is F₂+F₁ and the target optical signal whose frequency is F₂ is equal to an absolute value of a frequency difference between the stray optical signal whose frequency is F₂-F₁ and the target optical signal whose frequency is F₂, F₂-F₁ may be used as the second frequency in this application, and then, a phase difference between the stray optical signal whose frequency is F₂+F₁ and the stray optical signal whose frequency is F₂-F₁ is set to the first preset threshold, for example, 180 degrees.

Similarly, as shown in FIG. 7, because an absolute value of a frequency difference between the stray optical signal whose frequency is Fₙ-Fₙ₋₁ and the target optical signal whose frequency is Fₙ is equal to an absolute value of a frequency difference between the stray optical signal whose frequency is Fₙ+Fₙ₋₁ and the target optical signal whose frequency is Fₙ, Fₙ+Fₙ₋₁ may be used as the second frequency in this application, and then, a phase difference between the stray optical signal whose frequency is Fₙ-Fₙ₋₁ and the stray optical signal whose frequency is Fₙ+Fₙ₋₁ is set to the first preset threshold, for example, 180 degrees.

Similarly, as shown in FIG. 7, because an absolute value of a frequency difference between the stray optical signal whose frequency is 2Fₙ₋₁-Fₙ and the target optical signal whose frequency is Fₙ₋₁ is equal to an absolute value of a frequency difference between the stray optical signal whose frequency is 2Fₙ-Fₙ₋₁ and the target optical signal whose frequency is Fₙ, 2Fₙ-Fₙ₋₁ may be used as the second frequency in this application, and then, a phase difference between the stray optical signal whose frequency is 2Fₙ₋₁-Fₙ and the stray optical signal whose frequency is 2Fₙ-Fₙ₋₁ is set to the first preset threshold, for example, 180 degrees.

During specific implementation, after determining frequency distribution ranges of different frequency bands, the signal processing apparatus may set a frequency range for phase control, so that a phase of an optical signal of a frequency component outside the frequency band is opposite to a phase of an optical signal of a frequency component in the frequency band, in other words, a phase difference between the optical signal of the frequency component outside the frequency band and the optical signal of the frequency component in the frequency band is 180 degrees, to obtain a second optical signal shown in FIG. 7. In this way, when the second optical signal is input to the PD, impact of an interfering microwave signal caused by a stray optical signal in the frequency band passing through the PD may be canceled, where the stray optical signal includes a second-order stray optical signal and a third-order stray optical signal.

In this embodiment, when a stray optical signal of the first frequency is included in a target frequency band range that the modulated optical signal in the first optical signal is in, a phase value of a stray optical signal of the second frequency that is outside the target frequency band range is adjusted to be different from the stray optical signal of the first frequency by the first preset threshold, to reduce impact of interfering microwave signals obtained by the PD through demodulating the stray optical signal of the first frequency and the stray optical signal of the second frequency that pass through the PD.

In an optional embodiment, when the first frequency and the second frequency are different from the frequency included in the modulated optical signal, the first frequency in this embodiment may be in the target frequency band, and the second frequency may be outside the target frequency band.

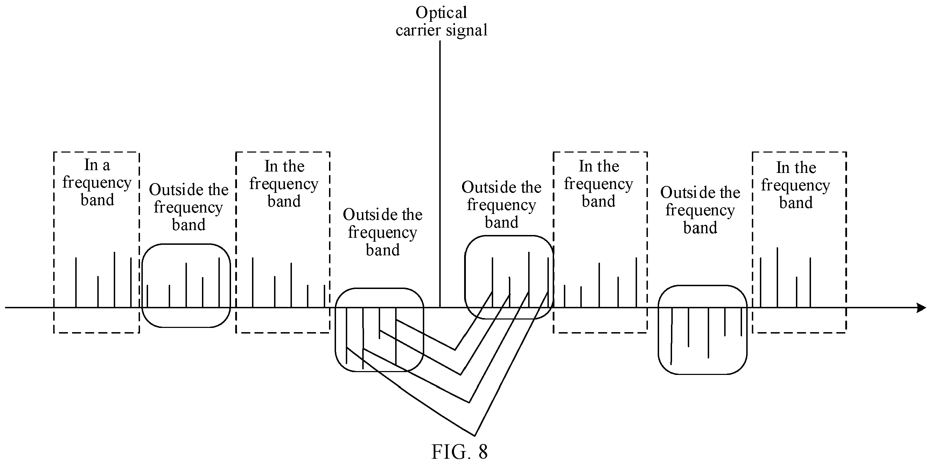

For example, as shown in FIG. 8, some frequencies of the first optical signal are in the target frequency band (namely, frequencies included in a frequency band circled by a dashed box in the figure), and the other frequencies are outside the target frequency band (namely, frequencies included in a frequency band circled by a circle in the figure). It should be understood that, optical signals corresponding to the frequencies outside the frequency band are usually stray optical signals, and in some cases, are all inside two frequencies outside the frequency band. There may be a case in which an absolute value of a difference between one of the frequencies and a third frequency in the first optical signal is equal to an absolute value of a difference between the other frequency of the two frequencies and a fourth frequency in the first optical signal. Therefore, in this embodiment, optical signals corresponding to the two frequencies that are both outside the frequency band may be used as the optical signal of the first frequency and the optical signal of the second frequency in this application, and then the optical signal of the first frequency and the optical signal of the second frequency.

Optionally, in a possible scenario, if both the optical signal of the first frequency and the optical signal of the second frequency that are intended to be reduced are symmetric with respect to a same frequency, in this application, a phase difference between the stray optical signal of the first frequency and the stray optical signal of the second frequency is also set to the first preset threshold, for example, 180 degrees. It may be understood that, in this scenario, the third frequency and the fourth frequency in this application are the same frequency.

Optionally, in this application, when the third frequency and the fourth frequency are the same frequency, the same frequency in this application may alternatively be a frequency of the optical carrier signal.

It should be understood that, in this scenario, both the stray optical signal of the first frequency and the stray optical signal of the second frequency may be in the target frequency band, or may be outside the target frequency band. This is not limited in embodiments of this application.

For example, as shown in FIG. 8, optical carrier signals corresponding to two frequencies outside the frequency band may be symmetric based on an optical carrier signal, in other words, absolute values of differences between the two frequencies and a frequency corresponding to the optical carrier signal are the same. Therefore, in this application, a phase difference between the two frequencies may be set to 180 degrees.

During specific implementation, after determining frequency distribution ranges of different frequency bands, the signal processing apparatus may set a frequency range for phase control, so that a phase difference between a stray optical signal corresponding to a frequency included in a first frequency range and the stray optical signal corresponding to the frequency included in the first frequency range is 180 degrees, where the frequency included in the first frequency range and a frequency included in a second frequency range are symmetric with respect to the frequency corresponding to the optical carrier signal, and frequencies included in the first frequency range and the second frequency range are frequencies outside the target frequency band, to obtain the second optical signal. In this way, when the second optical signal is input to the PD, impact of an interfering microwave signal obtained by the PD through demodulating a stray optical signal that is outside the frequency band and that passes through the PD can be canceled.

In this embodiment, when the optical signal of the first frequency is included outside a target frequency band range that the modulated optical signal in the first optical signal is in, a phase value of an optical signal of the second frequency that is outside the target frequency band range is adjusted to be different from the optical signal of the first frequency by the first preset threshold, to reduce impact of interfering microwave signals obtained by the PD through demodulating the stray optical signal of the first frequency and the stray optical signal of the second frequency that pass through the PD.

In an optional embodiment, in this application, the signal processing apparatus may further receive first feedback information, where the first feedback information indicates a second microwave signal obtained by the PD through demodulating the second optical signal and when the phase difference is the first preset phase value; and the signal processing apparatus adjusts the first preset phase value based on the second microwave signal.

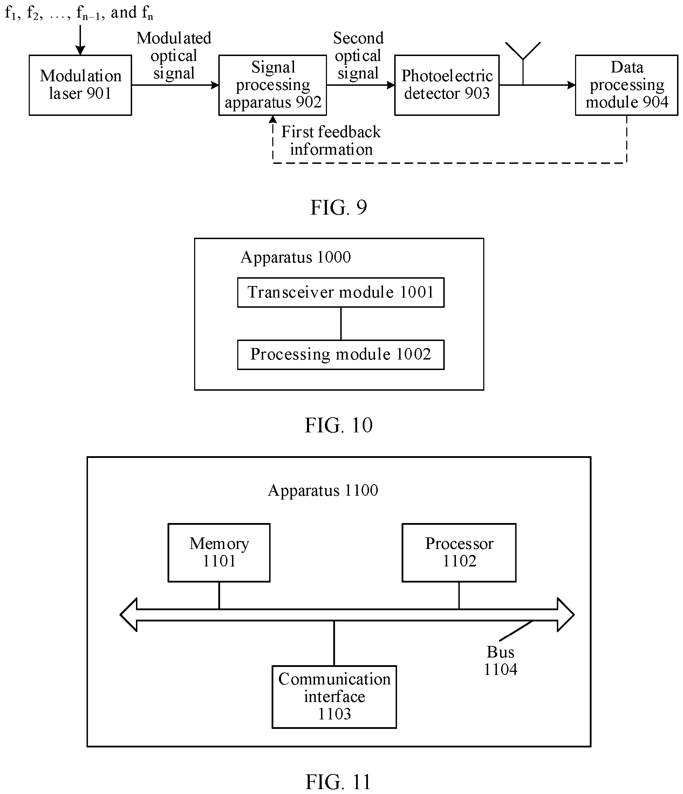

For example, FIG. 9 is a diagram of a structure of a signal processing system according to an embodiment of this application. As shown in FIG. 9, the signal processing system includes a modulation laser 901, a signal processing apparatus 902, a photoelectric detector 903, and a data processing module 904.

The modulation laser 901 is configured to: receive the first microwave signal, for example, a microwave signal (belonging to an electrical signal) that includes frequencies *f*₁ , *f*₂, *f*_{*n*-1}, ..., *fₙ* in FIG. 9, and modulate the first microwave signal by using the optical carrier signal to obtain an optical signal (also referred to as the modulated optical signal in this embodiment). In the transmission process of the modulated optical signal, a stray optical signal may be introduced. Consequently, distortion of the modulated optical signal may occur. It may be understood that, a distorted modulated optical signal is the first optical signal in this application. In other words, an optical signal finally input to the signal processing apparatus 902 is actually not the original modulated optical signal, but the first optical signal after the stray optical signal is introduced.

The signal processing apparatus 902 is configured to: perform phase modulation on the received first optical signal to obtain the second optical signal, and send the second optical signal to the photoelectric detector 903.

The photoelectric detector 903 is configured to demodulate the second optical signal to obtain the second microwave signal. After receiving the second optical signal and obtaining the second microwave signal through demodulation, the PD may transmit a part of the second microwave signal through an antenna, and may input a part of the second microwave signal to the data processing module 904. The data processing module 904 is configured to: analyze an interfering signal in a target microwave signal, and send the first feedback information to the signal processing apparatus, where the first feedback information indicates the second microwave signal obtained by the PD through demodulating the second optical signal and when the phase difference is the first preset phase value, so that the signal processing apparatus adjusts the first preset phase value based on the second microwave signal.

In this embodiment, the data processing module 904 may feed back the first feedback information to the signal processing apparatus 902, where the first feedback information indicates the second microwave signal. Correspondingly, after receiving the first feedback information, the signal processing may determine, based on the second microwave signal indicated by the first feedback information, whether the first preset phase value needs to be adjusted. In a feasible implementation solution, when obtaining the second microwave signal, the signal processing apparatus may analyze a similarity between the second microwave signal and the first microwave signal, and then adjust the first preset phase value based on the similarity. For example, if the similarity between the second microwave signal and the first microwave signal is very low, the first preset phase value may be adjusted, so that the signal processing apparatus can better process the first optical signal, thereby further reducing interference caused by the stray optical signal of the first frequency and the stray optical signal of the second frequency.

The foregoing describes in detail the signal processing method in embodiments of this application with reference to FIG. 3 to FIG. 9. The following describes in detail signal processing apparatuses in embodiments of this application with reference to FIG. 10 and FIG. 11.

FIG. 10 is a diagram of a structure of a signal processing apparatus according to an embodiment of this application. Specifically, as shown in FIG. 10, the apparatus 1000 includes a transceiver module 1001 and a processing module 1002.

The transceiver module 1001 is configured to receive a first optical signal, where the first optical signal includes optical signals of a plurality of frequencies. The processing module 1002 is configured to perform phase modulation on the first optical signal to obtain a second optical signal, where a phase difference between an optical signal of a first frequency and an optical signal of a second frequency in the second optical signal is a first preset phase value, and an absolute value of a difference between the first frequency and a third frequency in the second optical signal is the same as an absolute value of a difference between the second frequency and a fourth frequency in the second optical signal. The transceiver module is further configured to send the second optical signal to a photoelectric detector PD.

In an example, the processing module 1002 may be configured to perform the step of performing phase modulation on the first optical signal in the method described in FIG. 3. For example, a receiving module 1002 is configured to perform S302.

In a possible implementation, the first optical signal includes a modulated optical signal obtained by modulating a first microwave signal by using an optical carrier signal, and the first frequency and the second frequency are different from a frequency included in the modulated optical signal.

In a possible implementation, a part of the plurality of frequencies is distributed in a target frequency band, and the target frequency band is a frequency band that the modulated optical signal is in.

In a possible implementation, the first frequency is in the target frequency band, and the second frequency is outside the target frequency band.

In a possible implementation, the first frequency is outside the target frequency band, and the second frequency is outside the target frequency band.

In a possible implementation, the third frequency and the fourth frequency are a same frequency.

For example, the same frequency is a frequency of the optical carrier signal.

In a possible implementation, the first preset phase value is 180 degrees.

In a possible implementation, the transceiver module 1001 is further configured to: receive first feedback information, where the first feedback information indicates a second microwave signal obtained by the PD through demodulating the second optical signal and when the phase difference is the first preset phase value; and the processing module 1002 is further configured to adjust the first preset phase value based on the second microwave signal.

FIG. 11 is a diagram of a structure of a signal processing apparatus according to another embodiment of this application. The apparatus shown in FIG. 11 may be configured to perform the method according to any one of the foregoing embodiments.

As shown in FIG. 11, the apparatus 1100 in this embodiment includes a memory 1101, a processor 1102, a communication interface 1103, and a bus 1104. The memory 1101, the processor 1102, and the communication interface 1103 implement communication connections between each other through the bus 1104.

The memory 1101 may be a read-only memory (read only memory, ROM), a static storage device, a dynamic storage device, or a random access memory (random access memory, RAM). The memory 1101 may store a program. When the program stored in the memory 1101 is executed by the processor 1102, the processor 1102 is configured to perform steps of the method shown in FIG. 3 to FIG. 8.

The processor 1102 may be a general-purpose central processing unit (central processing unit, CPU), a microprocessor, an application-specific integrated circuit (application-specific integrated circuit, ASIC), or one or more integrated circuits, and is configured to execute a related program, to implement the method shown in FIG. 3 to FIG. 8 in this application.

The processor 1102 may alternatively be an integrated circuit chip, and has a signal processing capability. In an implementation process, the steps of the method in FIG. 3 to FIG. 8 in embodiments of this application may be completed by using an integrated logic circuit of hardware in the processor 1102 or by using instructions in a form of software.

The processor 1102 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor may implement or perform methods, steps, and logical block diagrams that are disclosed in embodiments of this application. The general-purpose processor may be a microprocessor, or the processor may be any conventional processor or the like.

The steps in the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1101. The processor 1102 reads information in the memory 1101, and completes, in combination with hardware of the processor, functions that need to be performed by units included in the apparatus in this application. For example, steps/functions in embodiments shown in FIG. 3 to FIG. 8 may be performed.

The communication interface 1103 may use, but is not limited to, a transceiver apparatus, for example, a transceiver, to implement communication between the apparatus 1100 and another device or a communication network.

The bus 1104 may include a path for transferring information between components (for example, the memory 1101, the processor 1102, and the communication interface 1103) of the apparatus 1100.

It should be understood that, the apparatus 1100 shown in this embodiment of this application may be an electronic device, such as the foregoing base station or a processing apparatus in the base station, or may be a chip configured in the electronic device.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded and executed on a computer, procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from a website, a computer, a server, or a data center to another website, computer, server, or data center in a wired (for example, infrared, radio, or microwave) manner. The computer-readable storage medium may be any usable medium accessible by a computer, or a data storage device, such as a server or a data center, including one or more usable medium sets. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that, the term "and/or" merely describes an association relationship between associated objects, and indicates that three relationships may exist. For example, A and/or B may indicate the following cases: Only A exists, both A and B exist, and only B exists, where A and B may be singular or plural. In addition, the character "/" in this specification generally indicates an "or" relationship between the associated objects, but may also indicate an "and/or" relationship. For details, refer to the context for understanding.

In this application, "at least one" means one or more, and "a plurality of" means two or more. "At least one item (piece) of the following" or a similar expression thereof means any combination of these items, including a singular item (piece) or any combination of a plurality of items (pieces). For example, at least one of a, b, or c may indicate: a, b, c, a-b, a-c, b-c, or a-b-c, where a, b, and c may be singular or plural.

It should be understood that, sequence numbers of the foregoing processes do not mean execution sequences in embodiments of this application. The execution sequences of the processes should be determined by functions and internal logic thereof, and should not be construed as any limitation on implementation processes of embodiments of this application.

A person of ordinary skill in the art may be aware that, in combination with examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for the particular applications, but it should not be considered that the implementation is outside the scope of this application.

It may be clearly understood by a person skilled in the art that, for the purpose of convenient and brief description, for a detailed working process of the foregoing system, apparatuses, and units, reference may be made to a corresponding process in the foregoing method embodiments. Details are not described herein again.

In a plurality of embodiments provided in this application, it should be understood that, the disclosed system, apparatuses, and method may be implemented in other manners. For example, the described apparatus embodiments are merely examples. For example, division of the units is merely logical function division and may have other division in an actual implementation. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between apparatuses or units may be implemented in electronic, mechanical, or other forms.

Units described as separate components may or may not be physically separate, and components displayed as units may or may not be physical units, to be specific, may be located at one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes a plurality of instructions for instructing a computer device (which may be a personal computer, a server, a network device, or the like) to perform all or some of the steps of the method described in embodiments of this application. The foregoing storage medium includes any medium that can store program code, such as a USB flash disk, a removable hard disk drive, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal processing method, applied to a signal processing apparatus, and comprising:
receiving a first optical signal, wherein the first optical signal comprises optical signals of a plurality of frequencies;
performing phase modulation on the first optical signal to obtain a second optical signal, wherein a phase difference between an optical signal of a first frequency and an optical signal of a second frequency in the second optical signal is a first preset phase value, and an absolute value of a difference between the first frequency and a third frequency in the second optical signal is the same as an absolute value of a difference between the second frequency and a fourth frequency in the second optical signal; and
sending the second optical signal to a photoelectric detector PD.

2. The method according to claim 1, wherein the first optical signal comprises a modulated optical signal obtained by modulating a first microwave signal by using an optical carrier signal, and the first frequency and the second frequency are different from a frequency comprised in the modulated optical signal.

3. The method according to claim 2, wherein a part of the plurality of frequencies is distributed in a target frequency band, and the target frequency band is a frequency band that the modulated optical signal is in.

4. The method according to claim 3, wherein the first frequency is in the target frequency band, and the second frequency is outside the target frequency band.

5. The method according to claim 3, wherein the first frequency is outside the target frequency band, and the second frequency is outside the target frequency band.

6. The method according to any one of claims 1 to 5, wherein the third frequency and the fourth frequency are a same frequency.

7. The method according to claim 6, wherein the same frequency is a frequency of the optical carrier signal.

8. The method according to any one of claims 1 to 7, wherein the first preset phase value is 180 degrees.

9. The method according to any one of claims 1 to 8, wherein the method further comprises:
receiving first feedback information, wherein the first feedback information indicates a second microwave signal obtained by the PD through demodulating the second optical signal and when the phase difference is the first preset phase value; and
adjusting the first preset phase value based on the second microwave signal.

10. A signal processing apparatus, comprising:
a transceiver module, configured to receive a first optical signal, wherein the first optical signal comprises optical signals of a plurality of frequencies; and
a processing module, configured to perform phase modulation on the first optical signal to obtain a second optical signal, wherein a phase difference between an optical signal of a first frequency and an optical signal of a second frequency in the second optical signal is a first preset phase value, and an absolute value of a difference between the first frequency and a third frequency in the second optical signal is the same as an absolute value of a difference between the second frequency and a fourth frequency in the second optical signal; and
the transceiver module is further configured to send the second optical signal to a photoelectric detector PD.

11. The apparatus according to claim 10, wherein the first optical signal comprises a modulated optical signal obtained by modulating a first microwave signal by using an optical carrier signal, and the first frequency and the second frequency are different from a frequency comprised in the modulated optical signal.

12. The apparatus according to claim 11, wherein a part of the plurality of frequencies is distributed in a target frequency band, and the target frequency band is a frequency band that the modulated optical signal is in.

13. The apparatus according to claim 12, wherein the first frequency is in the target frequency band, and the second frequency is outside the target frequency band.

14. The apparatus according to claim 12, wherein the first frequency is outside the target frequency band, and the second frequency is outside the target frequency band.

15. The apparatus according to any one of claims 10 to 14, wherein the third frequency and the fourth frequency are a same frequency.

16. The apparatus according to claim 15, wherein the same frequency is a frequency of the optical carrier signal.

17. The apparatus according to any one of claims 10 to 16, wherein the first preset phase value is 180 degrees.

18. The apparatus according to any one of claims 10 to 17, wherein the transceiver module is further configured to:
receive first feedback information, wherein the first feedback information indicates a second microwave signal obtained by the PD through demodulating the second optical signal and when the phase difference is the first preset phase value; and
the processing module is further configured to adjust the first preset phase value based on the second microwave signal.

19. A signal processing apparatus, comprising a memory and a processor, wherein
the memory is configured to store program instructions; and
the processor is configured to invoke the program instructions in the memory to perform the method according to any one of claims 1 to 9.

20. A communication system, comprising the signal processing apparatus according to any one of claims 10 to 19.

21. A computer-readable medium, wherein the computer-readable medium stores program code to be executed by a computer, and the program code comprises instructions used to perform the method according to any one of claims 1 to 9.

22. A computer program product, wherein the computer program product comprises computer program code; and when the computer program code is run on a computer, the computer is enabled to implement the method according to any one of claims 1 to 9.
